# EUROPÄISCHE PATENTANMELDUNG

(11) **EP 1 882 759 A2**
(43) Veröffentlichungstag der Anmeldung: **30.01.2008**
(21) Anmeldenummer: 07113019.9
(22) Anmeldetag: 24.07.2007
(51) Int. Cl.: C25D 5/48, C25D 7/00

(54) **Galvanische Oberflächenbeschichtung eines Bauteils**

(30) Priorität: 26.07.2006 DE 102006035233
(71) Anmelder: MAHLE International GmbH, 70376 Stuttgart (DE)
(72) Erfinder: Oschinsky, Ursula, 74613 Öhringen (DE); Wierling, Reinhard, 74629 Pfedelbach (DE)
(74) Vertreter: Patentanwalts-Partnerschaft Rotermund + Pfusch + Bernhard

(57) **Zusammenfassung**

Die vorliegende Erfindung betrifft eine galvanische Oberflächenbeschichtung (5) an einer Endscheibe (3) aus Eisen und/oder Stahl, die bei einem Filterelement (1) an einen Ringfilterkörper (2) axial angeklebt ist.

Um die Endscheibe (3) mit einer besonders hohen Korrosionsbeständigkeit für unterschiedliche, vom Filterelement (1) zu filternde Medien zu versehen, ist die galvanische Oberflächenbeschichtung (5) mit oder aus einer Zink-NickelLegierung hergestellt.

## Beschreibung

Die vorliegende Erfindung betrifft eine galvanische Oberflächenbeschichtung an einem Bauteil oder für ein Bauteil aus Eisen und/oder Stahl. Die Erfindung betrifft außerdem ein Filterelement zum Filtern hydraulischer Medien, bei dem eine derartige Oberflächenbeschichtung zur Anwendung kommt.

Bei der Herstellung von Serienbauteilen kommen häufig Blechteile zum Einsatz, die vergleichsweise einfach umformbar sind und die aus relativ preiswerten Eisen- bzw. Stahlwerkstoffen bestehen. Für die Herstellung preiswerter Bauteile werden dabei einfache Werkstoffe, wie z.B. Schwarzblech, verwendet. Je nach Umgebung dieses Blechteils besteht dabei eine mehr oder weniger große Korrosionsgefahr.

Beispielsweise kommen derartige Blechformteile bei Filterelementen zum Filtern hydraulischer Medien zum Einsatz. Dabei kann z.B. beim jeweiligen Filterelement ein vom jeweiligen, zu filternden Medium durchströmbarer Filterkörper zumindest an einen Stützkörper aus Eisen und/oder Stahl angeklebt sein, der vorzugsweise als Blechformteil hergestellt ist. Filterelemente und somit deren Bestandteile können einer Vielzahl unterschiedlicher und unterschiedlich aggressiver Medien ausgesetzt sein. Beispielsweise kommen Filterelemente bei Mineralölen, bei synthetischen Ölen, bei esterbasischen Ölen, bei pflanzlichen Ölen, bei wässrigen Lösungen und bei mehrwertigen Alkoholen zum Einsatz. Des Weiteren ist ein Kontakt mit Luft bzw. mit der jeweiligen Gasphase bei leerem oder nur teilweise befülltem Filterelement zu berücksichtigen. Eine Beschichtung zum Schutz des jeweiligen Blechbauteils ist zumindest bei einem Einsatz in einem Filterelement extrem unterschiedlichen Anforderungen ausgesetzt. Dabei soll die jeweilige Beschichtung möglichst universell bei allen vorgesehenen Einsatzgebieten einen möglichst guten Korrosionsschutz bieten, um verschiedene, jeweils speziell adaptierte Schutzschichten zu vermeiden. Ein derartiger Korrosionsschutz ist gerade bei Filterelementen von erhöhter Bedeutung, da mit Hilfe der Filterelemente Schmutz aus einem Medium herausgefiltert werden soll, so dass eine Verschmutzung des Mediums durch Korrosion innerhalb des Filterelements weitgehend vermieden werden sollte.

Weiter gestaltet sich bei derartigen Filterelementen zum Teil die Verklebung zwischen dem Filterkörper und dem jeweiligen Stützkörper problematisch, da die Haltekraft des jeweiligen Klebstoffs sehr stark von der jeweils verwendeten Oberflächenbeschichtung abhängt.

Grundsätzlich ist es allgemein bekannt, Blechteile zum Korrosionsschutz zu verzinken. Eine Oberflächenbeschichtung aus Zink hat den Vorteil, dass kleinere Verletzungen der Oberflächenbeschichtung "verheilen" können. Es hat sich jedoch gezeigt, dass verzinkte Stützkörper bei bestimmten Anwendungen der Filterelemente keine ausreichende Korrosionsbeständigkeit besitzen.

Des Weiteren ist es grundsätzlich bekannt, Blechteile zum Korrosionsschutz zu verchromen. Verwendet wird dabei allgemein sogenannter Gelbchrom oder Chrom 6+. Bei Gelbchrom kann sich jedoch eine reduzierte Haftung für den jeweils verwendeten Klebstoff einstellen, so dass die erwünschten Festigkeitswerte zwischen Filterkörper und Stützkörper mitunter nicht erreicht werden. Darüber hinaus wird derzeit ein mögliches Gesundheitsrisiko bei mit Gelbchrom arbeitenden Personen diskutiert.

Die vorliegende Erfindung beschäftigt sich mit dem Problem, für eine Oberflächenbeschichtung der eingangs genannten Art bzw. für ein Filterelement der eingangs genannten Art eine verbesserte Ausführungsform anzugeben, die sich insbesondere durch einen vergleichsweise guten Korrosionsschutz gegen unterschiedliche Medien auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine galvanische Oberflächenbeschichtung mit oder aus einer Zink-Nickel-Legierung zu bilden. In einer Vielzahl von Untersuchungen hat sich gezeigt, dass mit einer Zugabe von Nickel die Korrosionsbeständigkeit gegenüber einer reinen Zinkbeschichtung deutlich verbessert werden kann, während gleichzeitig die "selbstheilende" Eigenschaft einer Zinkbeschichtung erhalten bleibt.

Vorzugsweise ist dabei der Anteil an Zink in der Legierung deutlich größer als der Anteil an Nickel. Beispielsweise enthält die Legierung mindestens 80 % Zink und maximal 20 % Nickel. Aufwändige Versuchsreihen haben gezeigt, dass eine besonders günstige Korrosionsbeständigkeit erreicht wird, wenn die Legierung zwischen 85 bis 90 % Zink und zwischen 10 bis 15 % Nickel enthält.

Des Weiteren hat sich für einen besonders hohen Korrosionsschutz als günstig erwiesen, die Beschichtung mit einer Schichtdicke zwischen etwa 8 µm bis etwa 12 µm zu bilden.

Gemäß einer besonders vorteilhaften Ausführungsform kann die Legierung passiviert sein. Durch die Passivierung wird die Reaktionsfähigkeit der Legierung oberflächlich reduziert, wodurch sich ihre korrosionsschützende Wirkung nochmals verbessert. Gleichzeitig kann sich durch die Passivierung die Haftfähigkeit gegenüber dem jeweiligen Klebstoff verbessern. Besonders günstig ist dabei eine galvanische Passivierung mit Hilfe eines entsprechenden Stoffs oder Elements. Besonders günstige Resultate wurden dabei für Oberflächenbeschichtungen erzielt, deren Legierungen mit Chrom, vorzugsweise mit Chrom 3+, passiviert worden sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

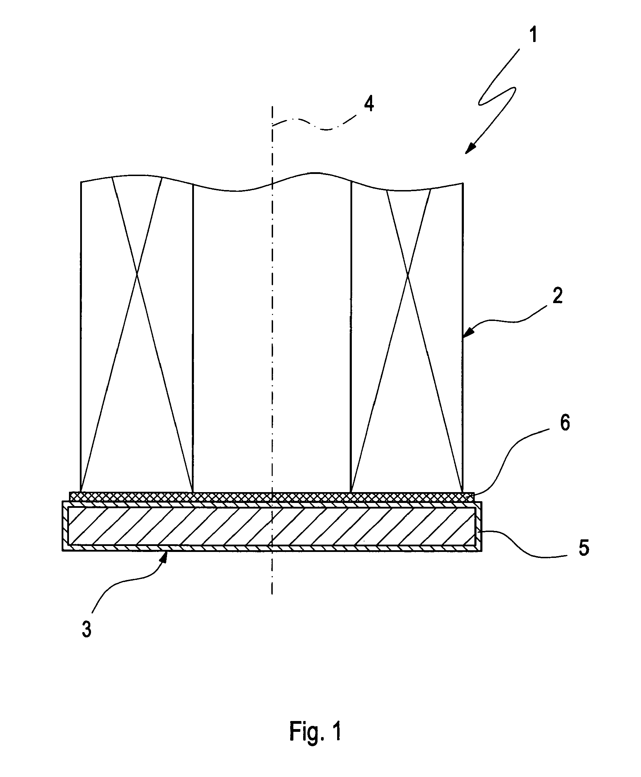

Die einzige Fig. 1 zeigt einen stark vereinfachten, prinzipiellen Längsschnitt durch ein Filterelement im Bereich eines Stützkörpers.

Entsprechend Fig. 1 weist ein Filterelement 1, das zum Filtern hydraulischer Medien dient, einen Filterkörper 2 und zumindest einen Stützkörper 3 auf. Der Filterkörper 2 ist vom jeweils zu filternden Medium durchströmbar. Beim zu filternden Medium kann es sich - je nach Einsatzzweck des Filterelements 1 - um Mineralöle, um synthetische Öle, insbesondere Esterverbindungen, pflanzliche Öle, um wässrige Lösungen, um mehrwertige Alkohole, insbesondere Glykolverbindungen, sowie um weitere Flüssigkeiten handeln. Der Filterkörper 2 ist bei der hier gezeigten, bevorzugten Ausführungsform als Ringfilterkörper ausgestaltet, der bezüglich einer Längsmittelachse 4 einen Rotationskörper bildet und im Betrieb des Filterelements 1 radial vom jeweils zu filternden Medium durchströmbar ist.

Der wenigstens eine Stützkörper 3 besteht aus Eisen und/oder Stahl. Vorzugsweise handelt es sich beim Stützkörper 3 um ein Blechteil, insbesondere aus Schwarzblech. Zum Korrosionsschutz ist der Stützkörper 3 mit einer Oberflächenbeschichtung 5 versehen. Vorzugsweise umfasst die Oberflächenbeschichtung 5 die gesamte Oberfläche des Stützkörpers 3. In der Folge bildet die Oberflächenbeschichtung 5 die Oberfläche des Stützkörpers 3. Auf diese Oberflächenbeschichtung 5 wird weiter unten noch näher eingegangen.

Der Stützkörper 3 ist mit dem Filterkörper 2 verklebt, wobei ein entsprechender Klebstoff in der Fig. 1 mit 6 bezeichnet ist. Da die Oberflächenbeschichtung 5 die Oberfläche des Stützkörpers 3 bildet, erfolgt die Verklebung letztlich zwischen dem Filterkörper 2 und der Oberflächenbeschichtung 5. Im gezeigten Ausführungsbeispiel handelt es sich beim Stützkörper 3 um eine Endscheibe, die den Ringfilterkörper 2 axial begrenzt. Der Ringfilterkörper 2 kann grundsätzlich mit zwei derartigen axialen Endscheiben 3 ausgestaltet sein. Vorzugsweise sind dann beide Endscheiben 3 mit einer solchen Oberflächenbeschichtung 5 versehen.

Als Klebstoff 6 kommt bevorzugt ein Kunstharz zum Einsatz. Beim Klebstoff 6 kann es sich ferner um einen Zwei-Komponenten-Klebstoff handeln, wie z.B. ein Zwei-Komponenten-Epoxid-Klebstoff oder ein Zwei-Komponenten-Polyurethan-Klebstoff.

Im Folgenden wird die am Stützkörper 3 angebrachte Oberflächenbeschichtung 5 näher erläutert.

Die Oberflächenbeschichtung 5 ist auf den Stützkörper 3 galvanisch aufgebracht. Somit handelt es sich hierbei um eine galvanische Oberflächenbeschichtung 5. Die Oberflächenbeschichtung 5 ist mit oder aus einer Zink-Nickel-Legierung hergestellt. Die Zink-Nickel-Legierung enthält vorzugsweise mehr Zink als Nickel. Insbesondere kann die Zink-Nickel-Legierung mindestens 80 % Zink und maximal 20 % Nickel enthalten. Besonders vorteilhaft ist eine Zink-Nickel-Legierung, die von 85 bis 90 % Zink und von 10 bis 15 % Nickel enthält. Die vorgeschlagene Zink-Nickel-Legierung zur Bildung der Oberflächenbeschichtung 5 zeichnet sich durch eine besonders gute Korrosionsbeständigkeit gegenüber den zuvor genannten, beim Filterelement 1 zum Einsatz kommenden Medien aus. Beachtenswert ist dabei, dass das Filterelement 1 bzw. dessen Stützkörper 3 auch Gasphasen ausgesetzt sein kann, wodurch der mit Hilfe der galvanischen Oberflächenbeschichtung 5 erzielte Korrosionsschutz zusätzlichen, anderen Korrosionsangriffen ausgesetzt ist. Die aus der Zink-Nickel-Legierung bestehende bzw. mit der Zink-Nickel-Legierung hergestellte Oberflächenbeschichtung 5 besitzt auch gegenüber den Gasphasen und Luft einen guten Korrosionsschutz.

Vorzugsweise besitzt die Oberflächenbeschichtung 5 eine Schichtdicke von etwa 8 µm bis etwa 12 µm. Eine kleinere Schichtdicke kann die selbstheilende Wirkung der Zink-Nickel-Legierung beeinträchtigen, während eine größere Schichtdicke die Kosten der Oberflächenbeschichtung 5 unnötig erhöht.

Entsprechend einer besonders vorteilhaften Ausführungsform kann die Zink-Nickel-Legierung passiviert sein. Die Passivierung wird bevorzugt galvanisch durchgeführt. Insbesondere kann die Zink-Nickel-Legierung mit Chrom, vorzugsweise mit Chrom 3+, passiviert werden. Durch die Passivierung der Zink-Nickel-Legierung kann die Korrosionsbeständigkeit der Oberflächenbeschichtung 5 zusätzlich gesteigert werden. Des Weiteren kann mit Hilfe der Passivierung die Haftfähigkeit der Oberflächenbeschichtung 5 gegenüber dem Klebstoff 6 signifikant verbessert werden.

Die Herstellung des Filterelements 1 bzw. die Herstellung des mit der Oberflächenbeschichtung 5 versehenen Bauteils, also hier des Stützkörpers 3 bzw. der Endscheibe, kann beispielsweise wie folgt ablaufen.

Das Aufgalvanisieren der Oberflächenbeschichtung 5 auf das Bauteil 3 erfolgt vorzugsweise innerhalb einer galvanischen Bäderkette. In einem ersten Bad wird das jeweilige Bauteil 3 gewaschen, um Verunreinigungen von der Oberfläche des Bauteils 3 zu entfernen. In einem zweiten Bad wird das jeweilige Bauteil 3 entfettet, um fettige oder ölige Rückstände von der Oberfläche des Bauteils 3 zu entfernen. In einem dritten Bad erfolgt die eigentliche Galvanisierung, bei welcher gleichzeitig die Zink- und die Nickel-Ionen galvanisch auf der Oberfläche des jeweiligen Bauteils 3 abgelagert werden, wodurch die Zink-Nickel-Legierung und somit die Oberflächenbeschichtung 5 aufgebaut wird, bis die jeweils gewünschte Schichtdicke erreicht ist. Anschließend wird in einem vierten Bad das bereits mit der (noch unfertigen) Oberflächenbeschichtung 5 versehene Bauteil 3 gespült, um Rückstände des dritten Bads zu entfernen. In einem fünften Bad erfolgt nun die Passivierung der Zink-Nickel-Legierung, bevorzugt ebenfalls galvanisch. Dabei lagern sich beispielsweise die Chrom-Ionen, vorzugsweise Chrom 3+, oberflächlich in die Zink-Nickel-Legierung ein. Anschließend wird das jeweilige Bauteil, das nunmehr mit der fertigen Oberflächenbeschichtung 5 versehen ist, in einem fünften Bad gespült.

Anschließend kann Klebstoff 6 auf das als Endscheibe ausgebildete Bauteil 3 aufgebracht werden. Der als Ringfilterkörper 2 ausgebildete Filterkörper wird in den Klebstoff 6 eingesetzt. Nach dem Aushärten des Klebstoffs 6 ist das Filterelement 1 fertig.

## Patentansprüche

1. Galvanische Oberflächenbeschichtung an einem Bauteil (3) aus Eisen und/oder Stahl oder für ein Bauteil (3) aus Eisen und/oder Stahl, mit oder aus einer Zink-Nickel-Legierung.

2. Oberflächenbeschichtung nach Anspruch 1,
**dadurch gekennzeichnet,**
- **dass** die Legierung mehr Zink als Nickel enthält, und/oder
- **dass** die Legierung mindestens 80 % Zink und maximal 20 % Nickel enthält, und/oder
- **dass** die Legierung zwischen 85 % und 90 % Zink und zwischen 10 % und 15 % Nickel enthält.

3. Oberflächenbeschichtung nach Anspruch 1 oder 2,
**dadurch gekennzeichnet,**
**dass** die Oberflächenbeschichtung (5) eine Schichtdicke etwa zwischen 8 µm und 12 µm aufweist.

4. Oberflächenbeschichtung nach einem der Ansprüche 1 bis 3,
**dadurch gekennzeichnet,**
- **dass** die Legierung passiviert ist, und/oder
- **dass** die Legierung galvanisch passiviert ist, und/oder
- **dass** die Legierung mit Chrom oder Chrom 3+ passiviert ist.

5. Oberflächenbeschichtung nach einem der Ansprüche 1 bis 4,
**dadurch gekennzeichnet,**
- **dass** das Bauteil (3) ein Blechteil ist und/oder aus Schwarzblech besteht, und/oder
- **dass** das Bauteil (3) ein Bestandteil, insbesondere eine Endscheibe, eines Hydraulikfilterelements ist.

6. Filterelement zum Filtern hydraulischer Medien,
- mit einem vom jeweiligen, zu filternden Medium durchströmbaren Filterkörper (2),
- mit wenigstens einem Stützkörper (3) aus Eisen und/oder Stahl, an dem der Filterkörper (2) mit einem Klebstoff (6) angeklebt ist,
- wobei der wenigstens eine Stützkörper (3) mit einer aufgalvanisierten Oberflächenbeschichtung (5) nach einem der Ansprüche 1 bis 5 versehen ist.

7. Filterelement nach Anspruch 6,
**dadurch gekennzeichnet,**
- **dass** der Filterkörper als radial durchströmbarer Ringfilterkörper (2) ausgestaltet ist, und/oder
- **dass** der wenigstens eine Stützkörper als den Ringfilterkörper (2) axial begrenzende Endscheibe (3) ausgestaltet ist.

8. Filterelement nach Anspruch 6 oder 7,
**dadurch gekennzeichnet,**
- **dass** der Klebstoff (6) ein Kunstharz ist, und/oder
- **dass** der Klebstoff ein Zwei-Komponenten-Klebstoff ist, und/oder
- **dass** der Klebstoff ein Epoxid-Klebstoff ist, und/oder
- **dass** der Klebstoff (6) ein Polyurethan-Klebstoff ist.
